# EUROPÄISCHE PATENTSCHRIFT

(11) **EP 0 925 613 B1**
(45) Veröffentlichungstag und Bekanntmachung des Hinweises auf die Patenterteilung: **15.01.2003**
(21) Anmeldenummer: 97941812.6
(22) Anmeldetag: 22.08.1997
(51) Int. Cl.: H01M 8/02, H01M 8/24

(54) **ZWISCHENELEMENT ZUR THERMISCHEN, ELEKTRISCHEN UND MECHANISCHEN VERBINDUNG ZWEIER TEILE**
INTERMEDIATE ELEMENT FOR THERMAL, ELECTRICAL AND MECHANICAL CONNECTION OF TWO PARTS
ELEMENT INTERMEDIAIRE POUR LA LIAISON THERMIQUE, ELECTRIQUE ET MECANIQUE DE DEUX PIECES

(30) Priorität: 04.09.1996 DE 19635901
(43) Veröffentlichungstag der Anmeldung: 30.06.1999
(73) Patentinhaber: SIEMENS AKTIENGESELLSCHAFT, 80333 München (DE)
(72) Erfinder: BUCHNER, Peter, D-91332 Heiligenstadt (DE); GRÜNE, Horst, D-91341 Röttenbach (DE); NEUMANN, Georg, D-91154 Roth (DE); VON HELMOLT, Rittmar, D-91052 Erlangen (DE)
(86) Internationale Anmeldenummer: DE9701827
(87) Internationale Veröffentlichungsnummer: WO98010477

(56) Entgegenhaltungen:
- EP-A- 0 129 272
- EP-A- 0 446 680
- WO-A-91/08595
- DE-A- 4 225 779
- US-A- 1 899 080
- PATENT ABSTRACTS OF JAPAN vol. 014, no. 055 (E-0882), 31.Januar 1990 -& JP 01 279573 A (HITACHI LTD), 9.November 1989,
- PATENT ABSTRACTS OF JAPAN vol. 013, no. 356 (E-803), 9.August 1989 -& JP 01 117275 A (MITSUBISHI ELECTRIC CORP), 10.Mai 1989,
- PATENT ABSTRACTS OF JAPAN vol. 012, no. 168 (E-611), 20.Mai 1988 -& JP 62 278758 A (SUMITOMO PRECISION PROD CO LTD;OTHERS: 02), 3.Dezember 1987,

## Beschreibung

Die Erfindung bezieht sich auf ein gewelltes Zwischenelement zur Verbindung zweier Polymer-Elektrolyt-Membran(PEM-)Brennstoffzellen.

Es sind Bipolarplatten zur elektrischen, thermischen und mechanischen Verbindung von Brennstoffzellen bekannt, wobei diese Bipolarplatten durchgehend, d.h. ohne Löcher oder Durchbrüche, ausgebildet sind. Nach diesem Stand der Technik kann ein Reaktionsmedium, das entlang der aktiven Fläche einer Bipolarplatte strömt, sich entweder unterhalb oder oberhalb dieser Platte befinden. Auch alle anderen bislang bekannten Zwischenelemente, die keine Bipolarplatten sind, nützen nur jeweils eine Oberfläche zum Kontakt mit dem Medium.

Die durchgehende Ausbildung der Bipolarplatten hat den Nachteil, daß das Kühl- oder Reaktionsmedium in einem Strom über die aktive Fläche geführt wird, ohne daß ein Austausch des Mediums von der Strommitte zum Außenbereich des Stromes stattfindet. Wenn das Medium an der Stromaußenseite verbraucht ist, kann es nicht durch unverbrauchtes Reaktionsmedium von der Strommitte her ersetzt werden, sondern muß durch neues, sich and er Stromaußenseite befindendes Medium ersetzt werden, so daß, kurz gesagt, eine hohe Durchflußgeschwindigkeit an Medium bei möglichst kleinen Medienstrom-Durchmessern gefordert wird. Nachteilig dabei ist, daß selbst bei geringen Medienstrom-Durchmessern immer der Anteil an Medium, der sich in der Strommitte befindet, ungenutzt durch die Anlage fließt.

Schließlich weisen die bekannten Bipolarplatten oder Zwischenelemente den Nachteil auf, daß die Druckübertragung ungleichmäßig, nämlich mit Spitzenbelastungen an den höchsten Erhebungen der Bipolarplatten, stattfindet.

Letzteren Bipolarplatten und/oder Zwischenelementen fehlt also nicht nur eine Möglichkeit, innerhalb Medienflusses auf ihrer aktiven Fläche einen Austausch des Mediums von der Medienstrommitte zur Stromaußenseite hin zu bewirken, eine Möglichkeit, die beidseitig vorhandene und beispielsweise im Kühlsystem wirksame Oberfläche zur Kontaktierung mit Medium zu gebrauchen, sondern auch die Fähigkeit, mechanischen Druck möglichst gleichmäßig über ihre gesamte Fläche hinweg weiterzugeben.

Es besteht ein Bedarf an Bipolarplatten, die ebenso wie die bekannten Bipolarplatten als elektrisch, mechanisch und thermisch verbindende Zwischenelemente in Brennstoffzellenstapel eingesetzt werden können und die gleichzeitig die oben genannten Nachteile verringern oder ganz beseitigen.

Aus der EP 0446 680 A1 ist ein Stromkollektor zur Stromführung zwischen benachbarten stapelförmig angeordneten Hochtemperatur-Brennstoffzellen bekannt, der aus separaten gewellten Blechbändern besteht, die in gegeneinander gegenphasiger Form angeordnet sind. Dabei werden diese Elemente aus einer mindestens 4 Gew.-% Aluminium enthaltenden Eisenbasis- oder Nickelbasislegierung, die weiterhin mindestens 15 Gew.-% Chrom enthalten sollen, gebildet. Dies bedeutet, daß das Aluminium in der Legierung als Nebenbestandteil zu verstehen ist. Weiterhin wird vorgeschlagen, zur Verbesserung der Kontaktierungen Zwischenschichten aus Edelmetall, insbesondere Gold, zu verwenden.

Ausgehend vom Stand der Technik ist es Aufgabe der vorliegenden Erfindung eine Bipolarplatte als ein Zwischenelement zur Verfügung zu stellen, das so ausgestaltet ist, daß im Medienstrom auf ihrer aktiven Fläche von der Mitte des Medienstromes her ein Austausch des Mediums zu den Außenbereichen hin, möglich ist. Außerdem ist es Aufgabe der Erfindung, ein einfaches Zwischenelement zu schaffen, das einen mechanischen Druck durch Kräfte von beiden Seiten gleichmäßig weitergibt. Schließlich ist es noch Aufgabe der Erfindung, die aktiv genutzte Oberfläche von Zwischenelementen zu optimieren und gegen aggressive Medien korrosionsbeständig zu machen.

Gegenstand der Erfindung ist ein gewelltes Zwischenelement gemäß Anspruch 1 zur thermischen, mechanischen und elektrischen Verbindung zweier Teile; sowie eine Verwendung gemäß Anspruch 4 und 6. Das Zwischenelement besteht also aus einem Material mit guter thermischer und elektrischer Leitfähigkeit, das außerdem geeignete elastische Eigenschaften zur Übertragung von mechanischem Druck aufweist. Zur Verringerung des Kontaktwiderstandes bei der Bildung eines "Stacks", d.h. eines Brennstoffzellenstapels, beispielsweise einer Batterie, können die erfindungsgemäßen Zwischenelemente vor ihrem Einbau einer Oberflächenbehandlung unterworfen werden, wie beispielsweise einer Vergoldung. Eine derartige Oberflächenbehandlung wird üblicherweise zur Verbesserung der elektrischen und thermischen Leitfähigkeit von Bipolarplatten durchgeführt.

Allgemeine Erkenntnis der Erfindung ist, daß durch die Ausbildung scharfer Kanten entlang der aktiven Fläche des Zwischenelements der Bipolarplatte das Medium, wenn es der aktiven Fläche entlangströmt, Verwirbelungen erfährt, die einen Austausch von Medium von der Mitte des Medienstromes- oder -flusses zu den Außenbereichen hin bewirkt. Außerdem ist allgemeine Erkenntnis der Erfindung, daß die aktive Fläche einer Bipolarplatte durch die Ausbildung von Löchern und Durchbrüchen bei gleichem Materialaufwand vervielfacht werden kann. Schließlich ist im Rahmen der Erfindung erkannt worden, daß eine Vielzahl von Erhöhungen und Vertiefungen auf einem Zwischenelement zu einer gleichmäßigen Druckübertragung führt.

Die Dicke der Zwischenelemente kann bis zu 0,5 mm betragen, bevorzugt beträgt sie zwischen 0,01 und 0,4 mm und besonders bevorzugt sind Zwischenelemente mit einer Dicke von ca. 0,05 mm.

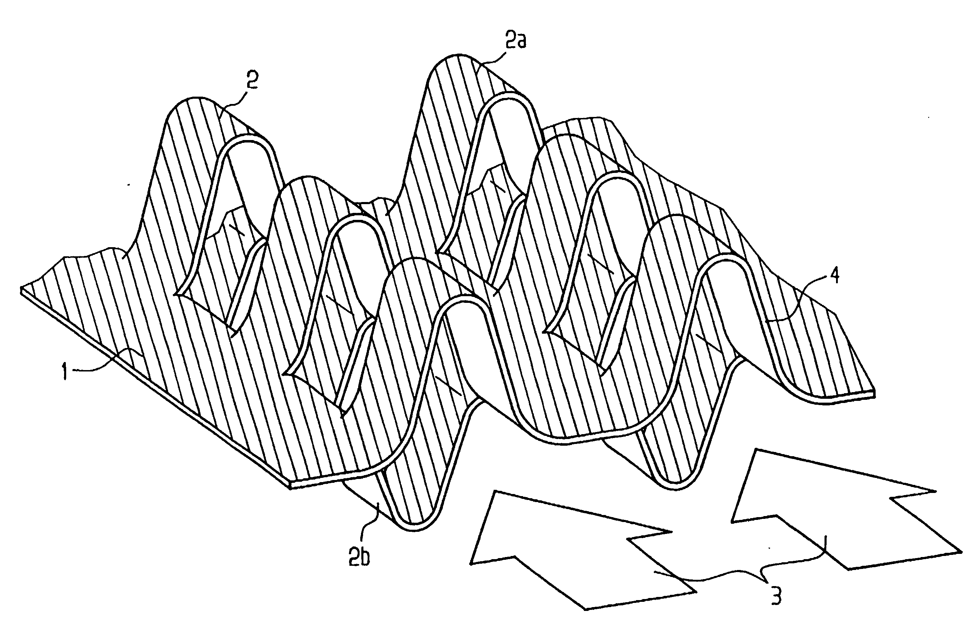

Weitere vorteilhafte Ausgestaltungen ergeben sich aus den Unteransprüchen sowie aus der Beschreibung und der Figur sowie den Erläuterungen dazu. Die einzige Figur zeigt ein Zwischenelement für Brennstoffzellen mit einer wellblechartigen Struktur.

Als "gewelltes Zwischenelement" oder "gewellte Bipolarplatte" werden hier flache, thermisch, mechanisch und elektrisch leitfähige Platten, Bleche, Scheiben oder sonstige, eher flächig ausgebildete Körper bezeichnet, die, ähnlich wie ein Wellblech, eine gewellte Struktur aufweisen. Die Höhe der Wellenberge bzw. die Differenz der Höhen zwischen Wellenberg und Wellental sind dabei beliebig und entsprechen den üblichen Abmessungen von Zwischenelementen, insbesondere von solchen, die in Brennstoffzellenstapeln eingesetzt werden.

Als "einzelne Unterbrechung der Welle längs ihres Wellenbergs oder Wellentals' werden die Durchbrüche bezeichnet, die die Ausbildung von einzelnen, alternierend nach unten und oben gebogenen Lamellen ermöglichen, die ähnlich wie Schlaufen ausgebogen sind. Die Bezeichnung "Schlaufen" kann sich dabei sowohl auf oben abgerundete, wie auch auf oben spitze "Ausbiegungen" beziehen, die in der Figur mit 2, 2a und 2b beziffert sind.

Durch diese einfache konstruktive Maßnahme der oben genannten Unterbrechungen wird erreicht, daß das Medium nicht nur entweder oberhalb oder unterhalb des Zwischenelements fließen kann, sondern es ist somit möglich, das Medium gleichzeitig oben und unten entlang des Zwischenelements zu führen. Die Oberfläche des Zwischenelements wird dadurch erheblich, d.h. bis zu einem Faktor von mehr als 10, erhöht. Durch die Vergrößerung der Oberfläche wird auch die "aktive Fläche", d.h. beispielsweise die Kontaktfläche, die für den thermischen Kontakt der Bipolarplatte mit dem Kühlmedium zur Verfügung steht, vergrößert. Das dient zur Erhöhung des Wirkungsgrades des betroffenen Systems.

Durch die Ausprägung der Lamellen - alternierend nach oben und nach unten hin - werden Kanten entlang einer Welle erzeugt, so daß der entlangfließende Medienstrom oder -fluß Verwirbelungen erfährt. Als "Medienstrom" wird hier der Fluß oder Strom des jeweils in Rede stehenden Reaktionsmediums, beispielsweise des Kühlmediums, bezeichnet, der entlang der für ihn relevanten aktiven Fläche eines Zwischenelements oder einer Bipolarplatte fließt und dabei systemgemäß abreagiert oder verbraucht wird oder sich erwärmt.

Sowohl die Vergrößerung der aktiven Fläche des Zwischenelements als auch die Erzeugung von Verwirbelungen im Medienstrom des Kühl- oder Reaktionsmediums verbessern den Wirkungsgrad, d.h. die effektive Nutzung des Mediums im System.

Ein weiterer Vorteil der in der Figur verdeutlichten Gestaltung der Zwischenelemente ist bezüglich der Druckübertragung, daß die abwechselnde Ausprägung der Lamellen nach oben und unten hin bewirkt, daß der Druck von einem Teil auf den nächsten, beispielsweise von einer Brennstoffzelle auf die andere, gleichmäßig übertragen wird.

Als Kühlmedium wird hier jede Art von Kühlmedium, wie z.B. Luft, Inertgas, Wasser, andere Gase oder Flüssigkeiten bezeichnet. Bevorzugt wird jedoch das Kühlmedium Luft oder ein anderes gasförmiges Kühlmedium erfindungsgemäß eingesetzt.

Die Erfindung bezieht sich auf die PEM(Polymer Elektrolyte Membrane)-Brennstoffzelle. Insbesondere wird dabei die Herstellung von Brennstoffzellenstapeln oder "Stacks" aus PEM-Brennstoffzellen, die mit Luftkühlung betrieben werden, berücksichtigt.

In der Figur kennzeichnet 1 ein Zwischenelement mit Wellenstruktur, wobei die einzelnen Wellen entlang ihres Wellenbergs mehrfach unterbrochen sind und die sich dadurch ausbildenden Lamellen 2 einmal nach oben hin, wie beispielsweise bei 2a und einmal nach unten hin, wie beispielsweise bei 2b gezeigt sind. Der Medienstrom an Kühl- oder Reaktionsmedium strömt auf die aktive Fläche des Zwischenelements entlang der Richtung, die durch die Pfeile 3 angegeben sind und kann sowohl zwischen den einzelnen Wellen entlang der schraffiert gezeichneten und durchgehenden Oberfläche des Zwischenelements als auch durch die von den einzelnen Lamellen der Wellen gebildeten (nicht geschlossenen) Kanäle fliessen. Dabei ist offensichtlich, daß dem Medium wesentlich mehr Oberfläche des Zwischenelements 1 zur Verfügung steht als nach herkömmlicher, nicht unterbrochenener Konstruktion einer Bipolarplatte, weil es nicht nur die schraffiert gezeichnete Oberfläche des Zwischenelementes, sondern auch über weite Bereiche die nicht schraffiert gezeichnete, ursprüngliche Unterseite der Bipolarplatte oder des Zwischenelements kontaktiert.

Ebenso deutlich sichtbar ist, daß jede Lamelle zwei Kanten, die quer zur Strömungsrichtung des Mediums stehen, ausbildet. An diesen Kanten finden nun Verwirbelungen des Medienstromes statt, die dazu führen, daß Medium aus der Strommitte in die Außenbereiche des Medienstromes gelangt und somit sich verbrauchtes und unverbrauchtes Medium in ständigem Austausch innerhalb des Medienstromes befindet. Dadurch ist es möglich, den Bedarf an Medium deutlich zu reduzieren.

Die erfindungsgemäßen Zwischenelemente mit der unterbrochenen Wellblechstruktur sind zudem besonders gut geeignet, um hohen mechanischen Druck (wenn durch eine entsprechende Wellung des Kollektors das Zwischenelement durch die Pressung des Zellstapels fixiert wird) zu übertragen, weil ein gleichmäßiger Druckübertrag durch die einzelnen Lamellen möglich ist. Dabei muß das Zwischenelement nicht extra an den angrenzenden Kollektoren der einzelnen Brennstoffzellen befestigt werden.

Das erfindungsgemäße Zwischenelement ist geeignet, mechanischen Druck und elektrischen Strom zwischen einzelnen Brennstoffzellen eines Brennstoffzellenstapels problemlos zu übertragen und es ist zudem geeignet, die Abfuhr der Verlustwärme vom Kollektor der Brennstoffzelle an das durchströmende Kühlmedium, wie beispielsweise Kühlluft, optimal zu gewährleisten. Erfindungsgemäß ist dabei die Kontaktoberfläche des Zwischenelements um mehr als das 10-fache größer als die Elektrodenfläche und außerdem wird die Ausnutzung des sich auf der aktiven Fläche des Zwischenelements befindenden Reaktionsmediums optimiert.

## Patentansprüche

1. Gewelltes Zwischenelement zur Verbindung zweier Polymer-Elektrolyt-Membran(PEM)-Brennstoffzellen, mit einem einstückigen, flächig ausgebildeten Körper mit Wellen, wobei gemäß Darstellung der Figur jede Welle entweder nur längs ihres Wellenbergs vielfach unterbrochen und nach unten hin ausgeprägt ist oder nur längs ihres Wellentals vielfach unterbrochen und nach oben ausgeprägt ist.

2. Gewelltes Zwischenelement nach Anspruch 1, wobei der einstückige, flächig ausgebildete Körper aus Federbronze und/oder einer Kupper-oder Aluminium legierung besteht.

3. Gewelltes Zwischenelement nach Anspruch 1, wobei der flächig ausgebildete Körper die Verbindung zweier luftgekühlter PEM-Brennstoffzellen ist.

4. Verwendung eines Zwischenelements nach einem der vorstehenden Ansprüche als Kühl- und Kontaktblech in einem PEM-Brennstoffzellenstapel.

5. Verwendung eines Zwischenelements nach Anspruch 4 in einem Stapel luftgekühlter PEM-Brennstoffzellen.

6. Verwendung eines Zwischenelements nach einem der Ansprüche 1 bis 3 zur Abstützung der einzelnen PEM-Brennstoffzellen des Stapels gegeneinander.

## Claims

1. Corrugated intermediate element for connecting two polymer electrolyte membrane (PEM) fuel cells, having a one-piece, planarly formed body with corrugations, wherein, in accordance with the representation of the figure, each corrugation is either interrupted many times just along its wave hill and is coined towards the bottom or is interrupted many times just along its wave valley and is coined towards the top.

2. Corrugated intermediate element according to claim 1, wherein the one-piece, planarly formed body is made of spring bronze and/or a copper or aluminium alloy.

3. Corrugated intermediate element according to claim 1, wherein the planarly formed body is the connection of two air-cooled PEM fuel cells.

4. Use of an intermediate element according to one of the preceding claims as a cooling and contact sheet in a PEM fuel-cell stack.

5. Use of an intermediate element according to claim 4 in a stack of air-cooled PEM fuel cells.

6. Use of an intermediate element according to one of claims 1 to 3 for the support of the individual PEM fuel cells of the stack with respect to each other.

## Revendications

1. Elément intermédiaire ondulé de liaison de deux piles à combustible à polymère-électrolyte-membrane (PEM) comprenant une pièce d'un seul tenant de constitution plate ayant des ondulations, dans lequel, conformément à ce qui est représenté à la figure, chaque ondulation ou bien est interrompue plusieurs fois le long de son sommet et est estampée vers le bas, ou bien est interrompue plusieurs fois le long de son creux et est estampée vers le haut.

2. Elément intermédiaire ondulé suivant la revendication 1, dans lequel la pièce d'un seul tenant de constitution plate est en bronze pour ressort et/ou en un alliage de cuivre ou en un alliage d'aluminium.

3. Elément intermédiaire ondulé suivant la revendication 1, dans lequel la pièce de constitution plate constitue la liaison entre deux piles à combustible PEM à refroidissement par de l'air.

4. Utilisation d'un élément intermédiaire suivant l'une des revendications précédentes comme tôle de refroidissement et de contact dans un empilement de piles à combustible PEM.

5. Utilisation d'un élément intermédiaire suivant la revendication 4 dans un empilement de piles à combustible du type PEM à refroidissement par de l'air.

6. Utilisation d'un élément intermédiaire suivant l'une des revendications 1 à 3 pour l'appui mutuel des piles à combustible PEM de l'empilement.
